# DEMANDE DE BREVET EUROPEEN

(11) **EP 3 395 629 A1**
(43) Date de publication de la demande: **31.10.2018**
(21) Numéro de dépôt: 18168318.6
(22) Date de dépôt: 19.04.2018
(51) Int. Cl.: B60S 1/38

(54) **COMPOSITION PERMETTANT DE MONTRER LES DÉFAUTS D ESSUYAGE D'UN BALAI D ESSUIE GLACE ET PROCÉDÉ DE DÉTERMINATION DE L ÉTAT D'USURE D'UN BALAI D ESSUIE-GLACE METTANT EN OEUVRE UNE TELLE COMPOSITION**

(30) Priorité: 28.04.2017 FR 1753819
(71) Demandeur: Valeo Systèmes d'Essuyage, 78322 Le Mesnil Saint Denis (FR)
(72) Inventeur: JOMARD, Olivier, 63500 ISSOIRE (FR); POTON, Eric, 63500 ISSOIRE (FR); SENAUX, Marc, ISSOIRE 63500 (FR); BOILEVIN, Antoine, 93012 BOBIGNY Cedex (FR); MARQUETTE, Felix, 93012 BOBIGNY Cedex (FR); BALLANGER, Stéphane, 93285 SAINT-DENIS Cedex (FR); BAILLEUL, Emeric, 93285 SAINT-DENIS Cedex (FR); INGOLD, Guillaume, 93285 SAINT-DENIS Cedex (FR); PELISSERO, Maria, 93285 SAINT-DENIS Cedex (FR)
(74) Mandataire: Valeo Systèmes d'Essuyage

(57) **Abrégé**

La présente invention concerne une composition (1) permettant de montrer les défauts d'essuyage (3) d'un balai d'essuie-glace (5), notamment pour véhicule automobile (7), afin de déterminer l'état d'usure du balai d'essuie-glace (5), ladite composition (1) permettant de montrer les défauts d'essuyage (3) étant destinée à être déposée en couche sur un pare-brise (9) dudit véhicule automobile (7), caractérisée en ce que la composition (1) permettant de montrer les défauts d'essuyage (3) comporte un composé traceur (11) permettant de mettre en lumière les défauts d'essuyage (3) du balai d'essuie-glace (5) et présente :
• une densité comprise entre 0,75 et 1,25 à 20°C, et
• une viscosité comprise entre 0,001 et 1,5 Pa.s à 20°C.

## Description

La présente invention concerne le domaine des moyens d'essuyage du vitrage des véhicules automobile. Plus précisément, la présente invention concerne une composition permettant de détecter les défauts d'essuyage des balais d'essuie-glace afin de déterminer leur état d'usure. Par ailleurs, la présente invention a également pour objet un procédé de détermination de l'état d'usure d'un balai d'essuie-glace mettant en oeuvre cette composition.

Les balais d'essuie-glace sont des pièces d'usure d'un véhicule automobile qu'il est nécessaire de remplacer régulièrement si l'on veut garantir une bonne qualité d'essuyage de la vitre. Cela s'avère notamment particulièrement important pour la sécurité de conduite lorsqu'il s'agit d'un balai d'essuie-glace du pare-brise du véhicule automobile.

Les sources d'usure du balai d'essuie-glace sont nombreuses et celui-ci est susceptible de se dégrader notamment au niveau de la lame d'essuyage. En effet, les balais d'essuie-glace sont généralement formés par un matériau élastomère qui va s'altérer au fur et à mesure du temps. La lame d'essuyage peut par exemple s'user à cause des frottements de celle-ci sur la vitre à essuyer, mais elle peut également s'user du fait de l'altération du matériau élastomère qui la compose.

La dégradation de la lame d'essuyage est généralement constatée par l'utilisateur du véhicule automobile lors de l'utilisation des balais d'essuie-glace. En effet, lorsque la lame d'essuyage s'use, celle-ci laisse des traces d'essuyage qui peuvent nuire à la visibilité et donc à la sécurité de conduite lorsqu'il pleut par exemple. Ces traces d'essuyage sont généralement dues à des craquelures qui se forment dans la lame d'essuyage ou à des déchirures du matériau élastomère composant le balai d'essuie-glace, principalement dues aux frottements de la lame d'essuyage sur la vitre à essuyer ou encore aux torsions liées au mouvement des balais d'essuie-glace lors de leur fonctionnement, mais également à certains facteurs environnementaux comme par exemple l'oxydation.

D'une manière générale, il est recommandé de changer ses balais d'essuie-glace tous les ans. Cependant, les automobilistes sont généralement incapables de se souvenir à quand remonte la dernière fois qu'ils ont procédé à l'échange des balais d'essuie-glace. En effet, une telle opération n'est généralement pas confiée à un spécialiste de la réparation automobile qui pourrait par exemple procéder au remplacement systématique et régulier des balais d'essuie-glace. Par ailleurs, selon l'utilisation du véhicule automobile et ses conditions de stationnement par exemple, l'altération des balais d'essuie-glace peut être plus ou moins rapide. Ainsi, il semble nécessaire d'arriver à déterminer aisément la nécessité de procéder au remplacement des balais d'essuie-glace afin de garantir de bonnes conditions de visibilité lors d'un épisode pluvieux par exemple.

La présente invention a pour objectif de proposer, notamment aux spécialistes de la réparation automobile, un produit permettant de détecter aisément la nécessité de procéder au remplacement des balais d'essuie-glace.

Un autre objectif de la présente invention est de proposer, notamment aux spécialistes de la réparation automobile, un procédé permettant de détecter aisément la nécessité de procéder au remplacement des balais d'essuie-glace.

A cet effet, pour atteindre au moins partiellement au moins un des objectifs précités, la présente invention a pour objet une composition permettant de montrer les défauts d'essuyage d'un balai d'essuie-glace, notamment pour véhicule automobile, afin de déterminer l'état d'usure du balai d'essuie-glace, ladite composition permettant de montrer les défauts d'essuyage étant destinée à être déposée en couche sur un pare-brise dudit véhicule automobile, la composition permettant de montrer les défauts d'essuyage comportant un composé traceur permettant de mettre en lumière les défauts d'essuyage du balai d'essuie-glace et présentant :
- une densité comprise entre 0,75 et 1,25 à 20°C, et
- une viscosité comprise entre 0,001 et 1,5 Pa.s à 20°C.

On entend par « composé traceur » un élément identifiable visuellement, tel qu'un composé chimique, coloré ou phosphorescent, mélangé à d'autres composés, permettant de tracer et de suivre visuellement des traces de résidus présents sur le pare-brise, notamment après le passage de balais d'essuie-glace.

Le composé traceur de la composition selon l'invention permet de suivre de manière visuelle sur le pare-brise la qualité d'essuyage des balais d'essuie-glace et donc leur degré d'usure.

En effet, la composition selon l'invention est déposée sur le pare-brise et après balayage de ladite composition par les balais d'essuie-glace, la présence de la composition non balayée par les balais sur le pare-brise, qui est détectée visuellement au moyen du composé traceur, révèle l'état d'usure des balais d'essuie-glace.

De préférence, le degré d'usure des balais est proportionnel à la quantité de la composition restante sur le pare-brise après balayage.

L'utilisation d'une composition présentant de telles caractéristiques physico-chimiques permet à celle-ci d'être déposée sur le pare-brise du véhicule automobile et d'être balayée par les balais d'essuie-glace et notamment par leur lame d'essuyage. Cependant, si cette lame d'essuyage présente des traces d'usure, comme des craquelures par exemple, la composition reste sur le pare-brise à l'endroit de passage de la trace d'usure de la lame d'essuyage permettant ainsi de mettre aisément en évidence la nécessité de procéder au remplacement des balais d'essuie-glace. Plus précisément, de telles caractéristiques physico-chimiques permettent de prévenir tout glissement par gravité de la composition sur le pare-brise du véhicule automobile. Cette composition permet donc un contrôle aisé et rapide de l'état d'usure des balais d'essuie-glace. Par ailleurs, cette composition peut aussi bien être utilisée par un spécialiste de la réparation automobile ou par toute autre personne étrangère au domaine de la réparation automobile.

La composition permettant de montrer les défauts d'essuyage selon la présente invention peut en outre comporter une ou plusieurs des caractéristiques suivantes prise seule ou en combinaison.

Selon une première variante, le composé traceur est un liquide.

Selon cette première variante, le composé traceur est un liquide fluorescent.

Avantageusement, le liquide est fluorescent lorsqu'il est irradié avec des rayons lumineux dont les longueurs d'onde se situent dans le domaine ultraviolet, et de manière préférée dont les longueurs d'onde sont comprises entre 315 nm et 400 nm.

Selon une deuxième variante, le composé traceur est une poudre.

Selon cette deuxième variante, le composé traceur est une poudre opaque ou colorée lorsqu'elle est irradiée par des rayons lumineux dont les longueurs d'onde se situent dans le domaine visible.

Avantageusement, le composé traceur présente une granulométrie inférieure à 1 µm, de préférence inférieure à 500 nm, et de manière encore préférée comprise entre 1 nm et 250 nm.

De manière alternative, le composé traceur est une mousse.

Avantageusement, le composé traceur est biodégradable.

Selon un mode de réalisation particulier, la composition permettant de montrer les défauts d'essuyage est contenue dans un aérosol.

La présente invention concerne également un procédé de détermination de l'état d'usure d'un balai d'essuie-glace comprenant les étapes suivantes :
- dépôt d'une composition permettant de montrer les défauts d'essuyage sur le pare-brise du véhicule automobile tel que défini précédemment,
- actionnement des balais d'essuie-glace du véhicule automobile de manière à ce qu'ils effectuent au moins un aller-retour sur le pare-brise, et
- vérification de la présence de traces, montrant les défauts d'essuyage, laissées par les balais d'essuie-glace sur le pare-brise du véhicule automobile.

Avantageusement, le procédé comprend en outre une étape préalable de nettoyage du pare-brise du véhicule automobile, ladite étape préalable de nettoyage étant réalisée avant l'étape de dépôt.

Selon une première variante, la composition permettant de montrer les défauts d'essuyage comporte un composé traceur sous la forme d'un liquide fluorescent et le procédé comporte en outre une étape d'irradiation au moins d'une zone de détection du pare-brise du véhicule automobile pour activer la fluorescence du composé traceur.

Selon cette première variante, l'étape d'irradiation est réalisée à l'aide d'une lampe émettant des rayonnements dont les longueurs d'onde se situent dans le domaine de l'ultraviolet, et de préférence comprises entre 315 nm et 400 nm.

Avantageusement selon cette première variante, le procédé comprend en outre une étape supplémentaire dans laquelle le véhicule automobile est placé dans une chambre noire pour réaliser l'étape d'irradiation du pare-brise du véhicule automobile afin de détecter le composé traceur.

Selon un deuxième variante, la composition permettant de montrer les défauts d'essuyage comporte un composé traceur sous la forme d'une poudre et l'étape de vérification de la présence de traces est réalisée de manière visuelle directe après l'étape d'actionnement des essuie-glace du véhicule automobile.

Selon une troisième variante, la composition permettant de montrer les défauts d'essuyage comporte un composé traceur sous la forme d'une mousse et l'étape de vérification de la présence de traces est réalisée de manière visuelle directe après l'étape d'actionnement des essuie-glace du véhicule automobile ou par irradiation d'au moins une zone de détection du pare-brise du véhicule automobile pour activer la fluorescence du composé traceur.

Selon cette troisième variante, l'étape d'irradiation est réalisée à l'aide d'une lampe émettant des rayonnements dont les longueurs d'onde se situent dans le domaine de l'ultraviolet, et de préférence comprises entre 315 nm et 400 nm.

Le procédé comprend en outre une étape finale de nettoyage du pare-brise du véhicule automobile, ladite étape finale étant réalisée après l'étape de vérification de la présence de traces.

D'autres avantages et caractéristiques de l'invention apparaîtront plus clairement à la lecture de la description suivante, donnée à titre illustratif et non limitatif, et des dessins annexés dans lesquels :
- la figure 1 est une représentation schématique de face d'un pare-brise d'un véhicule automobile après le passage des balais d'essuie-glace sur lequel une composition permettant de montrer les défauts d'essuyage selon un premier mode de réalisation a été initialement déposée,
- la figure 2 est une représentation schématique de face d'un pare-brise d'un véhicule automobile après le passage des balais d'essuie-glace sur lequel une composition permettant de montrer les défauts d'essuyage selon un deuxième mode de réalisation a été initialement déposée,
- la figure 3 est un diagramme de principe illustrant un procédé de détermination de l'état d'usure d'un balai d'essuie-glace selon l'invention,
- la figure 4 est un diagramme de principe illustrant un procédé de détermination de l'état d'usure d'un balai d'essuie-glace selon un premier mode de réalisation,
- la figure 5 est un diagramme de principe illustrant un procédé de détermination de l'état d'usure d'un balai d'essuie-glace selon un deuxième mode de réalisation,
- la figure 6 est un diagramme de principe illustrant un procédé de détermination de l'état d'usure d'un balai d'essuie-glace selon un troisième mode de réalisation, et
- la figure 7 est un diagramme de principe illustrant un procédé de détermination de l'état d'usure d'un balai d'essuie-glace selon un quatrième mode de réalisation.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, la densité est définie comme la masse volumique du corps comparée à la masse volumique de l'eau pure à 4°C. Ainsi, la densité dans la description suivante est une grandeur sans unité.

Par ailleurs, dans la description suivante, on entend par « biodégradable » un composé qui peut être décomposé par des micro-organismes en molécules simples ou un composé qui ne présente aucune toxicité particulière pour l'environnement.

Ensuite, dans la description suivante, on entend par « partie extérieure », une surface se trouvant au contact de l'environnement extérieur à l'habitacle du véhicule automobile.

De plus, le terme « lumière blanche » est entendu ici comme une lumière présentant un spectre dont les longueurs d'onde sont comprises dans le domaine visible, c'est-à-dire comprises entre 400 et 800 nm. Le terme lumière blanche peut aussi bien correspondre à de la lumière naturelle venant du Soleil qu'à de la lumière artificielle venant de lampes émettant des rayonnements dont les longueurs d'ondes sont dans le domaine visible.

A l'inverse, on entend dans la description suivante par « lumière noire », une lumière artificielle dont les rayonnements émis ont des longueurs d'onde dans le domaine de l'ultraviolet, et de préférence comprises entre 315 nm et 400 nm.

Par ailleurs, on entend par « boue » dans la description suivante, des eaux de lavage contenant les composants de la composition en solution ou en suspension.

Enfin, dans la description suivante, on entend par « salissures » des polluants organiques ou minéraux pouvant venir se déposer sur la partie extérieure du pare-brise du véhicule, ces polluants pouvant être solides ou non.

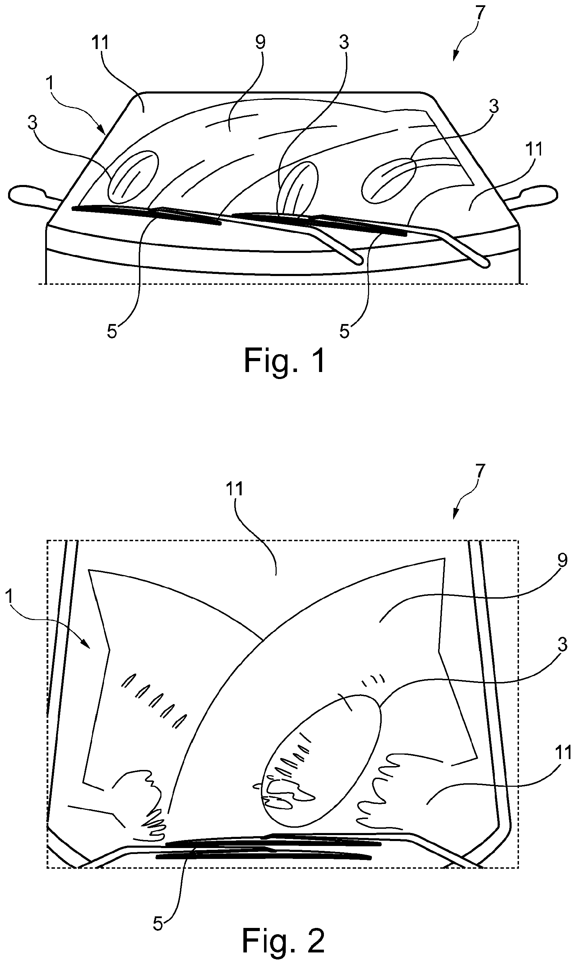

En référence aux figures 1 et 2, il est représenté une face avant d'un véhicule automobile 7. Cette face avant présente notamment un pare-brise 9 équipé de balais d'essuie-glace 5 permettant par exemple d'évacuer de l'eau de pluie, de la rosée, ou de la buée présente au niveau de la partie extérieure de ce pare-brise 9 afin de garantir de bonnes conditions de visibilité à l'utilisateur de ce véhicule automobile 7.

Sur ces figures, une composition 1 permettant de montrer les défauts d'essuyage 3 du balai d'essuie-glace 5 est déposée en couche sur le pare-brise 9 dudit véhicule automobile 7. Cette composition 1 permet notamment de déterminer l'état d'usure des balais d'essuie-glace 5 en montrant les défauts d'essuyage 3 de ces balais. En effet, lorsqu'un balai d'essuie-glace 5 est usé il laisse des traces telles que des stries, des traces de broutement ou encore un voile lors de son passage sur le pare-brise 9. Cependant, de telles traces ne sont pas toujours aisément détectables lors du contrôle de l'état d'usure des balais d'essuie-glace 5 par un spécialiste de la réparation automobile par exemple.

Afin de faciliter la détection de l'état d'usure des balais d'essuie-glace 5, la composition 1 comporte un composé traceur 1 permettant de mettre en lumière les défauts d'essuyage 3 du balai d'essuie-glace 5. En effet, la composition est déposée en couche sur l'ensemble du pare-brise 9 du véhicule automobile et est ensuite balayée par les balais d'essuie-glace 5. En cas d'usure de ces balais d'essuie-glace, le composé traceur 11 reste sur les zones du pare-brise 9 balayées par la partie du balai d'essuie-glace 5 présentant des signes d'usure et permet ainsi de mettre en lumière un défaut d'essuyage 3 sur le pare-brise 9. Afin d'offrir une adhérence suffisante sur le pare-brise 9 du véhicule automobile 7 pour faire apparaître les défauts d'essuyage 3, la composition 1 présente une densité comprise entre 0,75 et 1,25 à 20°C, et une viscosité comprise entre 0,001 et 1,5 Pa.s à 20°C. En effet, de telles propriétés physico-chimiques préviennent le glissement par gravité de la composition 1 sur le pare-brise 9.

Selon le mode de réalisation particulier de la figure 1, le composé traceur 11 de la composition 1 est une poudre. Avantageusement, la poudre une fois déposée sur le pare-brise 9 est opaque. Selon ce mode de réalisation particulier, la poudre présente une couleur blanche. Cependant, selon d'autres modes de réalisation non représentés ici, la poudre peut présenter n'importe quelle couleur perceptible par la vue par simple irradiation par de la lumière blanche. De telles couleurs sont idéalement choisies afin de contraster avec le pare-brise 9 afin de montrer aisément les défauts d'essuyage 3. Ainsi des poudres de couleur jaune, ou encore orange par exemple peuvent être utilisées comme composé traceur 11.

Par ailleurs, afin de maintenir l'intégrité du pare-brise 9, et notamment afin d'éviter les rayures, le composé traceur 11 sous forme de poudre présente une dureté inférieure à la dureté du pare-brise 9

De plus, afin de mettre en évidence les défauts d'essuyage, et plus précisément les fissures pouvant être présentes au niveau de la lame d'essuyage du balai d'essuie-glace 5, le composé traceur 11 sous forme de poudre présente une granulométrie inférieure à 1 µm, et de préférence inférieure à 500 nm. En effet, si la poudre présente une granulométrie supérieure à 1 µm, il est possible que la particule puisse être bloquée dans la lame d'essuyage au niveau du défaut, comme une fissure par exemple, et nuise à l'efficacité de la détection des défauts d'essuyage 3. Selon le mode de réalisation particulier de la figure 1, la poudre constituant le composé traceur 11 présente une granulométrie comprise entre 1 nm et 250 nm.

De plus, selon le mode de réalisation particulier de la figure 1, les défauts d'essuyage 3 mis en lumière par la composition 1 correspondent à des stries. Selon cet exemple particulier, l'état d'usure des balais d'essuie-glace 5 semble nécessiter le remplacement de ceux-ci.

Avantageusement, le composé traceur 11 de la composition 1 est biodégradable. Plus particulièrement, la composition 1 après utilisation peut être lavée et donc évacuée sous forme de boues par exemple, et ces boues ne présentent aucune toxicité vis-à-vis de l'environnement. Le composé traceur 11 peut par exemple être constitué d'une poudre de cellulose, d'une poudre minérale, ou encore d'un polymère fluorescent biodégradable.

Par ailleurs, la composition 1 permettant de détecter les défauts d'essuyage 3 peut être contenue dans un aérosol afin de faciliter son dépôt en couche sur le pare-brise 9 du véhicule automobile 7.

Selon le mode de réalisation particulier de la figure 2, le composé traceur 11 constituant la composition 1 est un liquide. Selon ce mode de réalisation particulier, le composé traceur 11 est un liquide fluorescent et le pare-brise 9 du véhicule automobile 7 représenté sur cette figure est éclairé par une lampe émettant des longueurs d'onde dans le domaine ultraviolet afin d'activer ainsi la fluorescence du composé traceur 11. De manière préférée, les lampes utilisées sont des lampes à « lumière noire », c'est-à-dire émettant des rayonnements dont les longueurs d'onde se situent dans l'ultraviolet proche, et plus particulièrement comprises entre 315 nm et 400 nm. L'utilisation d'un tel composé traceur 11 permet de conserver la propreté du pare-brise 9 après la détermination de l'état d'usure des balais d'essuie-glace 5 car un tel composé est généralement transparent lorsqu'il est irradié par des longueurs d'onde comprises dans le domaine visible. Avantageusement, un tel composé traceur 11 ne nécessite pas de lavage après vérification de la présence de défauts d'essuyage 3.

Selon le mode de réalisation particulier de la figure 2, la composition 1 indique des défauts d'essuyage 3 sur le pare-brise 9. Ces défauts d'essuyage 3 correspondent à des broutements des balais d'essuie-glace 5. Selon l'exemple représenté sur la figure 2, la composition 1 indique qu'il est nécessaire de procéder au remplacement des balais d'essuie-glace 5 afin de conserver de bonnes conditions de visibilité en cas d'épisode pluvieux par exemple.

Selon un autre mode de réalisation non représenté ici, le composé traceur 11 peut être un liquide coloré, c'est-à-dire visible à l'oeil nu lorsqu'il est exposé à de la lumière blanche.

Selon un autre mode de réalisation non représenté ici, le composé traceur 11 de la composition 1 est une mousse. Selon cet exemple de réalisation, le composé traceur 11 peut être coloré ou fluorescent.

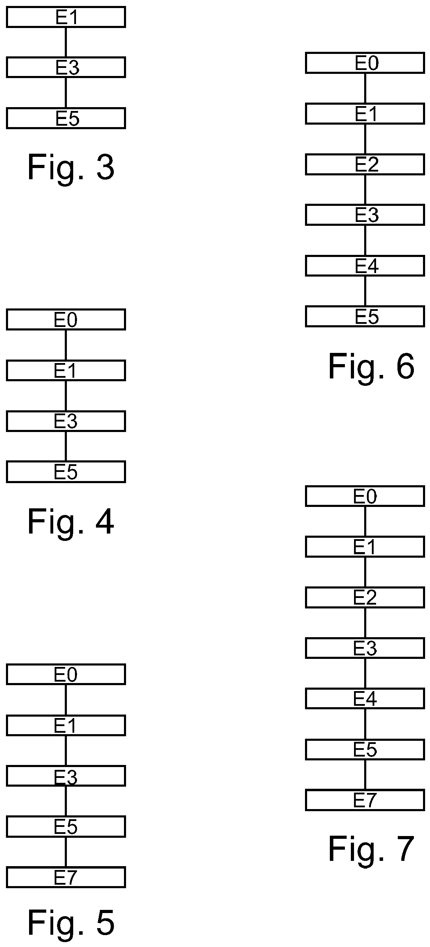

La présente invention concerne également un procédé de détermination de l'état d'usure d'un balai d'essuie-glace 5. En référence à la figure 3, le procédé comprend une étape de dépôt E1 d'une composition 1 permettant de montrer les défauts d'essuyage 3 sur le pare-brise 9 du véhicule automobile 7 telle que décrite précédemment. Le procédé met ensuite en oeuvre une étape d'actionnement E3 des balais d'essuie-glace 5 du véhicule automobile 7 de manière à ce qu'ils effectuent au moins un aller-retour sur le pare-brise 9, et de préférence trois allers-retours. Au cours de cette étape d'actionnement E3, la composition 1 déposée sur le pare-brise 9 lors de l'étape de dépôt E1 est balayée totalement ou partiellement par les balais d'essuie-glace 5 selon leur état d'usure. Le procédé met ensuite en oeuvre une étape de vérification E5 de la présence de traces, montrant les défauts d'essuyage 3, éventuellement laissées par les balais d'essuie-glace 5 sur le pare-brise 9 du véhicule automobile 7. En effet, si les balais d'essuie-glace 5 présentent des défauts d'usure par exemple, la composition 1 ne sera pas totalement balayée lors de l'étape d'actionnement E3 et des stries (comme représenté sur la figure 1) ou des broutements (comme représenté sur la figure 2), correspondant à des défauts d'essuyage 3, pourront apparaître par exemple. Cette étape de vérification E5 permet d'évaluer l'état d'usure des balais d'essuie-glace 5 et de déterminer rapidement s'il est nécessaire de procéder à leur remplacement.

En référence à la figure 4, il est représenté un schéma de principe d'un procédé de détermination de l'état d'usure d'un balai d'essuie-glace 5 selon un premier mode de réalisation. Afin d'améliorer la détection des défauts d'essuyage 3, il est recommandé de déposer la composition 1 sur un pare-brise 9 propre. Ainsi, le procédé comprend en outre une étape préalable E0 de nettoyage du pare-brise 9 du véhicule automobile 7. Cette étape préalable E0 de nettoyage est réalisée avant l'étape de dépôt E1. En effet, la présence de salissures sur le pare-brise 9 peut nuire à l'adhérence de la composition 1 sur celui-ci. Selon ce premier mode de réalisation, les autres étapes du procédé sont ensuite mises en oeuvre telles que décrites précédemment.

En référence à la figure 5, il est représenté un schéma de principe d'un procédé de détermination de l'état d'usure d'un balai d'essuie-glace 5 selon un deuxième mode de réalisation. Selon ce deuxième mode de réalisation, le composé traceur 11 est un élément coloré visible lorsqu'il est irradié par des longueurs d'onde situées dans le domaine visible. Plus particulièrement, le composé traceur 11 de la composition 1 est sous la forme d'une poudre. Selon ce deuxième mode de réalisation, l'étape de vérification E5 de la présence de traces est réalisée de manière visuelle directe après l'étape d'actionnement E3 des essuie-glaces du véhicule automobile 7. Le pare-brise 9 au moment de cette étape de vérification E5 selon ce deuxième mode de réalisation correspond à celui représenté par la figure 1.

Par ailleurs, selon ce mode de réalisation la composition 1 est contenue dans un aérosol présentant une buse de projection. L'étape de dépôt E1 est mise en oeuvre par pulvérisation de la composition 1 sur le pare-brise 9. Ainsi, une couche sensiblement homogène de la composition 1 est déposée sur le pare-brise 9. Avantageusement, lors de la pulvérisation de la composition 1 sur le pare-brise 9, la buse de projection de l'aérosol est à une distance d'environ 15 cm du pare-brise 9.

La composition 1 présentant une couleur, il est nécessaire de l'éliminer du pare-brise 9 après l'étape de vérification E5 permettant de déterminer l'état d'usure des balais d'essuie-glace 5 afin de garantir un bon état de propreté du pare-brise 9 et de bonnes conditions de visibilité pour l'utilisateur du véhicule automobile 7. A cet effet, le procédé comprend en outre, selon ce deuxième mode de réalisation, une étape finale E7 de nettoyage du pare-brise 9 du véhicule automobile 7. Avantageusement, cette étape finale E7 de nettoyage est réalisée par projection d'un liquide tel que de l'eau par exemple sur le pare-brise 9 du véhicule automobile 7. Par ailleurs, le composé traceur 1 est biodégradable, c'est-à-dire que les boues de lavage produites lors de l'étape finale E7 ne présentent aucune toxicité envers l'environnement.

En référence à la figure 6, il est représenté un schéma de principe d'un procédé de détermination de l'état d'usure d'un balai d'essuie-glace 5 selon un troisième mode de réalisation. Selon ce troisième mode de réalisation, la composition 1 permettant de montrer les défauts d'essuyage 3 comporte un composé traceur 11 sous la forme d'un liquide fluorescent. Selon ce troisième mode de réalisation, le procédé comporte en outre une étape d'irradiation E4 au moins d'une zone de détection du pare-brise 9 du véhicule automobile 7 pour activer la fluorescence du composé traceur 11. Cette irradiation peut par exemple être réalisée à l'aide d'une lampe à « lumière noire » portative. Dans ce cas, le spécialiste de la réparation automobile par exemple expose différentes zones du pare-brise 9 aux rayonnements émis par cette lampe afin d'activer la fluorescence du composé traceur 11, permettant ainsi la mise en oeuvre de l'étape de vérification E5 de la présence de traces d'essuyage. L'utilisation d'un tel composé traceur 11 permet de détecter différents défauts d'essuyage 3, comme par exemple des broutements des balais d'essuie-glace 5 correspondant aux défauts d'essuyage 3 représentés sur la figure 2.

Selon un manière préférée de ce troisième mode de réalisation, et de manière optionnelle, le procédé de détermination de l'état d'usure d'un balai d'essuie-glace 5 comprend en outre une étape supplémentaire E2 dans laquelle le véhicule automobile 7 est placé dans une chambre noire pour réaliser l'étape d'irradiation E4 du pare-brise 9 du véhicule automobile 7 afin de détecter le composé traceur 11. Avantageusement, l'étape supplémentaire E2 permet d'avoir une vue d'ensemble du pare-brise 9 du véhicule automobile 7. Par ailleurs, cette étape supplémentaire E2 permet de voir l'efficacité des balais d'essuie-glace 5 lors de leur fonctionnement aussi bien au cours d'un mouvement ascendant qu'au cours d'un mouvement descendant. Ainsi, certains défauts d'essuyage 3 mineurs peuvent être aisément détectés.

Selon ce troisième mode de réalisation, l'étape finale E7 de nettoyage n'est pas nécessaire car le composé traceur 11 est transparent à la lumière blanche. Ainsi, il ne peut pas gêner les conditions de visibilité et donc la sécurité de la conduite.

En référence à la figure 7, il est représenté un schéma de principe d'un procédé de détermination de l'état d'usure d'un balai d'essuie-glace 5 selon un quatrième mode de réalisation. Selon ce quatrième mode de réalisation, la composition 1 permettant de montrer les défauts d'essuyage 3 comporte un composé traceur 11 sous la forme d'une mousse. Selon ce mode de réalisation, la mousse est fluorescente. De manière avantageuse, le procédé met en oeuvre l'étape supplémentaire E2 dans laquelle le véhicule automobile 7 est placé dans une chambre noire et les défauts d'essuyage 3 sont révélés au cours de l'étape d'irradiation E4. Cette étape d'irradiation E4 est mise en oeuvre par irradiation du pare-brise 9 du véhicule automobile 7 avec des rayonnements présentant une longueur d'onde idéalement comprise entre 315 nm et 400 nm pour activer la fluorescence du composé traceur 11. Par ailleurs, le procédé selon ce quatrième mode de réalisation comprend l'étape finale E7 de nettoyage. En effet, il est possible que la mousse en séchant laisse des traces sur le pare-brise du véhicule automobile 7. Ces traces peuvent gêner la visibilité de l'utilisateur et donc porter atteinte à la sécurité de la conduite.

Selon un autre mode de réalisation non représenté ici, le composé traceur 11 peut être sous la forme d'une mousse visible à l'oeil nu. Dans ce cas, l'étape de vérification E5 de la présence de traces est réalisée de manière visuelle directe après l'étape d'actionnement E3 des essuie-glaces du véhicule automobile 7.

Les exemples de réalisation exposés ci-dessus sont décrits à titre illustratif et non limitatif. En effet, il est tout à fait possible pour l'homme de l'art de projeter la composition 1 sur le pare-brise 9 du véhicule automobile 7 directement sans nécessiter l'utilisation d'un aérosol sans sortir du cadre de la présente invention. Par ailleurs, l'homme de l'art pourra tout à fait utiliser un composé traceur 11 présentant des propriétés de phosphorescence sans sortir du cadre de la présente description.

Ainsi, la détermination de l'état d'usure des balais d'essuie-glace 5 d'un véhicule automobile 7 de manière rapide et aisée est possible grâce à l'utilisation d'une composition 1 comprenant un composé traceur 11 telle que décrite ci-dessus.

La détermination de l'état d'usure des balais d'essuie-glace peut également se faire via une application téléphone. En prenant une photographie du pare-brise après un cycle de lavage puis d'essuyage via l'application téléphone, celle-ci évalue le degré d'usure des balais d'essuie-glace en fonction de la qualité d'essuyage du pare-brise.
En effet, si la lame d'essuyage présente des traces d'usure, comme des craquelures par exemple, le liquide de lavage reste sur le pare-brise à l'endroit de passage de la trace d'usure de la lame d'essuyage dégradant ainsi la qualité d'essuyage. Cette usure est mise en évidence via l'application qui indique à l'utilisateur la nécessité de procéder au remplacement des balais d'essuie-glace.
Cette évaluation peut aussi être couplée à d'autres informations présentes dans l'application, telles que la date de remplacement des balais, le nombre de cycles d'essuyage, le bruit, le temps météorologique, etc.

La détermination de l'état d'usure des balais d'essuie-glace via une application téléphone peut également se faire en prenant directement une photographie du profil de la lame.
Dans cette variante, la détermination de l'état d'usure des balais d'essuie-glace se basera notamment sur la déformation du profil de la lame.
Si le profil de la lame est déformé à l'état libre, c'est-à-dire en position non appuyée sur le pare-brise alors l'application indiquera, en fonction du degré de déformation de la lame, que le remplacement des balais d'essuie-glace est requis, et inversement si le profil de la lame n'est pas déformé en position non appuyée sur le pare-brise alors l'application indiquera que les balais d'essuie glace sont conformes et ne nécessitent pas d'être changés.
La détermination de l'état d'usure des balais d'essuie-glace peut, de manière alternative ou de manière combinée, se baser sur le degré d'usure de la lèvre de la lame et/ou de son revêtement.
Pareillement à la variante précédemment décrite, la détermination de l'état d'usure des balais d'essuie-glace ainsi décrite peut être couplée à d'autres informations présentes dans l'application, telles que la date de remplacement des balais, le nombre de cycles d'essuyage, le bruit, le temps météorologique, etc.

## Revendications

1. Composition (1) permettant de montrer les défauts d'essuyage (3) d'un balai d'essuie-glace (5), notamment pour véhicule automobile (7), afin de déterminer l'état d'usure du balai d'essuie-glace (5), ladite composition (1) permettant de montrer les défauts d'essuyage (3) étant destinée à être déposée en couche sur un pare-brise (9) dudit véhicule automobile (7), **caractérisée en ce que** la composition (1) permettant de montrer les défauts d'essuyage (3) comporte un composé traceur (11) permettant de mettre en lumière les défauts d'essuyage (3) du balai d'essuie-glace (5) et présente :
• une densité comprise entre 0,75 et 1,25 à 20°C, et
• une viscosité comprise entre 0,001 et 1,5 Pa.s à 20°C.

2. Composition (1) permettant de montrer les défauts d'essuyage (3) selon la revendication précédente, **caractérisée en ce que** le composé traceur (11) est un liquide.

3. Composition (1) permettant de montrer les défauts d'essuyage (3) selon la revendication 2, **caractérisée en ce que** le composé traceur (11) est un liquide fluorescent.

4. Composition (1) permettant de montrer les défauts d'essuyage (3) selon la revendication 1, **caractérisée en ce que** le composé traceur (11) est une poudre.

5. Composition (1) permettant de montrer les défauts d'essuyage (3) selon la revendication 4, **caractérisée en ce que** le composé traceur (11) présente une granulométrie inférieure à 1 µm, de préférence inférieure à 500 nm, et de manière encore préférée comprise entre 1 nm et 250 nm.

6. Composition (1) permettant de montrer les défauts d'essuyage (3) selon la revendication 1, **caractérisé en ce que** le composé traceur (11) est une mousse.

7. Composition (1) permettant de montrer les défauts d'essuyage (3) selon l'une quelconque des revendications précédentes, **caractérisée en ce que** le composé traceur (11) est biodégradable.

8. Procédé de détermination de l'état d'usure d'un balai d'essuie-glace (5) **caractérisé en ce qu'**il comprend les étapes suivantes :
• dépôt (E1) d'une composition (1) permettant de montrer les défauts d'essuyage (3) sur le pare-brise (9) du véhicule automobile (7) selon l'une quelconque des revendications précédentes,
• actionnement (E3) des balais d'essuie-glace (5) du véhicule automobile (7) de manière à ce qu'ils effectuent au moins un aller-retour sur le pare-brise (9), et
• vérification (E5) de la présence de traces, montrant les défauts d'essuyage (3), laissées par les balais d'essuie-glace (5) sur le pare-brise (9) du véhicule automobile (7).

9. Procédé de détermination de l'état d'usure d'un balai d'essuie-glace (5) selon la revendication 8, **caractérisé en ce qu'**il comprend en outre une étape préalable (E0) de nettoyage du pare-brise (9) du véhicule automobile (7), ladite étape préalable (E0) de nettoyage étant réalisée avant l'étape de dépôt (E1).

10. Procédé de détermination de l'état d'usure d'un balai d'essuie-glace (5) selon l'une quelconque des revendications 8 et 9, **caractérisé en ce que** la composition (1) permettant de montrer les défauts d'essuyage (3) comporte un composé traceur (11) sous la forme d'un liquide fluorescent et **en ce que** le procédé comporte en outre une étape d'irradiation (E4) au moins d'une zone de détection du pare-brise (9) du véhicule automobile (7) pour activer la fluorescence du composé traceur (11).

11. Procédé de détermination de l'état d'usure d'un balai d'essuie-glace (5) selon la revendication 10, **caractérisé en ce que** le procédé comprend en outre une étape supplémentaire (E2) dans laquelle le véhicule automobile (7) est placé dans une chambre noire pour réaliser l'étape d'irradiation (E4) du pare-brise (9) du véhicule automobile (7) afin de détecter le composé traceur (11).

12. Procédé de détermination de l'état d'usure d'un balai d'essuie-glace (5) selon l'une quelconque des revendications 8 ou 9, **caractérisé en ce que** la composition (1) permettant de montrer les défauts d'essuyage (3) comporte un composé traceur (11) sous la forme d'une poudre et **en ce que** l'étape de vérification (E5) de la présence de traces est réalisée de manière visuelle directe après l'étape d'actionnement (E3) des essuie-glace du véhicule automobile (7).

13. Procédé de détermination de l'état d'usure d'un balai d'essuie-glace (5) selon l'une quelconque des revendications 8 ou 9, **caractérisé en ce que** la composition (1) permettant de montrer les défauts d'essuyage (3) comporte un composé traceur (11) sous la forme d'une mousse et **en ce que** l'étape de vérification (E5) de la présence de traces est réalisée de manière visuelle directe après l'étape d'actionnement (E3) des essuie-glace du véhicule automobile (7) ou par irradiation d'au moins une zone de détection du pare-brise (9) du véhicule automobile (7) pour activer la fluorescence du composé traceur (11).

14. Procédé de détermination de l'état d'usure d'un balai d'essuie-glace (5) selon l'une quelconque des revendications 8 à 13, **caractérisé en ce que** le procédé comprend en outre une étape finale (E7) de nettoyage du pare-brise (9) du véhicule automobile (7), ladite étape finale (E7) étant réalisée après l'étape de vérification (E5) de la présence de traces.
